# EUROPÄISCHE PATENTSCHRIFT

(11) **EP 4 386 196 B1**
(45) Veröffentlichungstag und Bekanntmachung des Hinweises auf die Patenterteilung: **05.11.2025**
(21) Anmeldenummer: 23211220.1
(22) Anmeldetag: 21.11.2023
(51) Int. Cl.: F03B 13/06, H02J 15/00

(54) **VERFAHREN UND SYSTEM ZUR GRAVITATIVEN ENERGIESPEICHERUNG**
GRAVIMETRIC ENERGY STORAGE SYSTEM AND METHOD
PROCÉDÉ ET SYSTÈME DE STOCKAGE D'ÉNERGIE PAR GRAVITÉ

(30) Priorität: 28.11.2022 DE 102022131351
(43) Veröffentlichungstag der Anmeldung: 19.06.2024
(73) Patentinhaber: Karlsruher Institut für Technologie, 76131 Karlsruhe (DE)
(72) Erfinder: Gudehus, Gerd, 76275 Ettlingen (DE); Lempp, Christof, 70192 Stuttgart (DE); Schilling, Frank, 76773 Kuhardt (DE); Stutz, Hans Henning, 76131 Karlsruhe (DE)

(56) Entgegenhaltungen:
- EP-B1- 2 464 819
- WO-A1-2020/111947
- US-A- 2 947 146
- US-A1- 2019 078 014
- US-A1- 2023 243 330

## Beschreibung

Die Erfindung betrifft ein Verfahren zur Herstellung und Betrieb eines Systems zur unterirdischen gravitativen Energiespeicherung gemäß dem Anspruch 1. Ferner betrifft die Erfindung das System und eine Anordnung mit mehrerer dieser Systeme zur unterirdischen gravitativen Energiespeicherung gemäß der Ansprüche 4 bzw. 8, sowie einer Verwendung des Systems gemäß Anspruch 11.

Energiespeicher der eingangs genannten Art dienen der Speicherung schwankender Energieaufkommen, beispielsweise erneuerbarer Energie, vorzugsweise kinetische oder elektrischer Energie. Eine vorhandene vorzugsweise kinetische Energie wird dabei reversibel in eine speicherbare Energieform, d.h. in eine bevorzugt potentielle Energie umgewandelt, um sie bei Bedarf wieder in eine kinetische Energie, vorzugsweise in die ursprünglich vorliegende Energieform zurück zu wandeln. Eine Energie wird nur temporär in eine speicherfähige andere Energieform überführt.

Schon sehr lange sind allgemein Pumpspeicherkraftwerke bekannt, bei denen ein Speichermedium, meist Wasser, auf ein höheres Niveau in ein Reservoir wie z.B. ein Stausee hochgepumpt wird und dort gespeichert wird. Die dabei im Reservoir gespeicherte potentielle Energie ist dann bei Bedarf abrufbar. Sie ist durch Ablassen von Wasser über eine Turbine wieder in kinetische und von da über einen Generator in elektrische Energie rückwandelbar. Zum Einsatz kommen dabei sogenannte Pumpenturbinen, bestehend aus einer Strömungsmaschine, die sowohl als Turbine als auch als Pumpe einsetzbar ist, mechanisch mit einer elektrischen Maschine gekoppelt, die als Antrieb für die Pumpe und als Generator für die Turbine einsetzbar ist. Pumpenturbinen dienen je nach Betriebszustand als Pumpen oder als Generator. Derartige Pumpspeicherkraftwerke erfordern jedoch entsprechende topographische Umgebungen sowie einen erheblichen Platzbedarf insbesondere für Stauseen.

Ferner sind auch Energiespeicher geläufig, bei denen meist ein kompressibles Speichermedium in einen abgeschlossenen, z.B. unterirdischen Hohlraum verdichtet und bei Bedarf über eine Turbine oder eine andere Expansionsmaschine mit oder ohne Generator in Energie zurückgewandelt wird. Energie wird so reversibel in eine speicherbare elastisch komprimierte potentielle Energie gewandelt und zwischengespeichert. Diese Bauform erfordert nicht die topographischen Rahmenbedingungen eines Pumpspeicherwerks und ist vor allem auch mobil nutzbar.

Aus DE 10 2010 034 757 A1 ist eine als "Gravity Storage" geläufige Technologie zur hydraulischen Energiespeicherung bekannt. Bei dieser wird ein zylindrischer Felskörper in einer ebenfalls zylindrischen Felsöffnung geführt durch eine Injektion eines hydraulischen Speichermediums angehoben (Energiespeicherung). Über ein Wiederablassen des unter Druck stehenden Speichermediums unter dem Felskörper erfolgt eine Rückgewinnung der gespeicherten Energie, wobei die hierfür eingesetzte Pumpe als Energiewandler dient. Zwischen dem Felskörper und der Felsöffnung befindet sich ein Dichtungsring. Für eine praktische Umsetzung wichtige Detailproblematiken wie auch deren Lösungen wie z.B. Festkörperreibung oder Ausbrüche beim Verschieben des Felsköpers in der Felsöffnung bei der Injektion vermieden werden kann, werden nicht erwähnt.

Die Gravity Storage genannte Technologie sieht vor, einen zylindrischen Felskörper zur Energiespeicherung hydraulisch anzuheben und zur Energiegewinnung abzusenken, wobei die Pumpe als Generator wirkt. Wie Ausbrüche bei der erforderlichen Injektion vermieden und die den Wirkungsgrad mindernde Reibung an der Zylinderwand reduziert werden soll, wird nicht gesagt. Der herauskommende Zylinder würde im Bodenbereich ohne Zementierung zerfallen. Eine Nutzung des Geländes ist damit ausgeschlossen.

US 2011/0113769 A1 beschreibt ein Energiespeichersystem, das sich besonders für die Zwischenspeicherung größerer Energiemengen eignet. Es wird ein ausgedehntes (typischerweise 160.000-250.000 m²) ebenes Speichervolumen im Erdreich nahe der Erdoberfläche vorgeschlagen, welches über eine Turbine mit Wasser als Speichermedium befüllbar ist. Das über dem Speichervolumen angeordnete Erdreich dient der Erzeugung eines Innendrucks im Speichervolumen; angegeben wird eine Erdreichdicke über dem Speichervolumen von 20 - 25 m. Die Dicke lässt sich durch Aufschüttungen vergrößern oder variieren. Das Speichervolumen ist durch eine untere und eine obere Membran dichtend ausgekleidet, wobei die obere Membran (z.B. Polymer) leichter und die untere Membran (z.B. Beton) schwerer als das Speichermedium ist.

Auch in EP 3 692 253 B1 wird ein System zur Speicherung von Energie und/ oder Wasser im Erdreich vorgeschlagen. Es wird vorgesehen, in einen Aushubbereich eine an ihrem Rand verschweißte Doppelmembran aus Polyurethan zu legen und dann den ausgehobenen Boden wieder aufzuschütten. Beim Einpumpen von Wasser aus einem benachbarten Teich, vorzugsweise unterhalb der Doppelmembran angeordnet, bildet die Doppelmembran ein kissenförmiges Speichervolumen aus, welches das Erdreich und damit die Erdoberfläche darüber anhebt und beim Ablassen des Speichermediums wieder absenkt. Beim Ablassen senkt sich der Boden über dem Speichervolumen, und die Pumpe wirkt als Generator. Kapazität und Wirkungsgrad dieser gravitativen Energiespeicherung sind durch verfügbare Aushubtiefen und -weiten begrenzt sowie dadurch, dass der Boden über dem Wasserkissen instabil werden kann. Die Pumpe zum Befüllen des Speichermediums dient zugleich als Generator. Kapazität und Wirkungsgrad dieser gravitativen Energiespeicherung sind durch verfügbare Aushubtiefen und -weiten begrenzt sowie dadurch, dass der Boden über dem Speichervolumen grundsätzlich instabil ist. Eine Doppelmembran aus Polyurethan ist im Vergleich zu den Membranen aus US 2011/0113769 A1 zwar besser kontrollierbar, jedoch weniger robust.

Die von Aquanamic in EP 3 692 253 B1 vorgeschlagene Technologie sieht vor, in einen Aushubbereich eine an ihrem Rand verschweißte Doppelmembran aus Polyurethan zu legen und dann den ausgehobenen Boden wieder aufzuschütten. Beim Einpumpen von Wasser aus einem benachbarten Teich bildet die Doppelmembran ein Kissen, das den Boden darüber anhebt, beim Ablassen senkt sich dieser Boden, und die Pumpe wirkt als Generator. Kapazität und Wirkungsgrad dieser gravitativen Energiespeicherung sind durch verfügbare Aushubtiefen und -weiten begrenzt sowie dadurch, dass der Boden über dem Wasserkissen instabil werden kann. Eine Doppelmembran aus Polyurethan ist eher kontrollierbar als diejenige der o.g. Technologie, doch weniger robust. Energie wird so wie mit Gravity Storage und der o.g. Technologie gespeichert, doch mit Aquanamic ist die Kapazität durch Aushubtiefen begrenzt und das Gelände kaum noch nutzbar.

Die vorgenannten im Erdreich integrierten Energiespeichersysteme erfordern eine umfangreiche Abdichtung des bei einer Speicherung unter Druck stehenden Speichervolumens zum umgebenden Erdreich hin. Die vorgestellten Membranen und Dichtungsmittel sind so ausgelegt, dass sie vor Ort manuell appliziert und bei einer Beschädigung reparierbar oder austauschbar sein müssen. Die Zugänglichkeit begrenzt damit auch wirtschaftlich vertretbare Einbautiefe eines Speichervolumens. Diese begrenzte Einbautiefe bedeutet aber zugleich auch, dass bei einer Befüllung und/oder Entleerung eines Speichervolumens zu einer Anhebung bzw. Absenkung der Erdoberfläche über dem Speichervolumen hervorgerufen wird, wodurch die Erdoberfläche für eine weiterführende Nutzung oder Bebauung nicht zur Verfügung steht. Durch die geringen Überdeckungshöhen wird eine vergleichsweise geringe Energie-Effizienz impliziert, was mit ggf. weiträumigen plastifizierten Bereichen zusammenhängt.

Ferner ist aus der EP 2 464 819 B1 ein Verfahren zum Speichern von Energie bekannt. Es ist vorgesehen, einen Bereich des Untergrunds, vorzugsweise einer Felsformation durch Einpressen von Wasser aufzureißen und dabei Kunstharz zuzugeben, das sich an den Rissflächen, bevorzugt an den Rissspitzen der Fraktur anbindet, aushärtet und eine fluiddichte Membran bildet. Es entsteht ein druckfestes Speichervolumen, in das zu einem späteren Zeitpunkt als Fluiddruckspeicher für die Zwischenspeicherung von Energie nutzbar ist. Es wird von einer elastischen Verformbarkeit des Untergrunds ausgegangen, womit hohe Wirkungsgrade bis zu 70 bis 75% realisierbar wären. Tatsächlich verhält sich Fels beim Fracking weitgehend anelastisch, und Fluidausbrüche ließen sich durch Zugabe von Kunstharz allein nicht vermeiden, auch und gerade bei alternierendem Einpumpen und Herauslassen des Fluids. Auch führen wiederholte Druckwechsel im Speicher dazu, dass das ausgehärtete Kunstharz einer plastischen Schädigung und damit Zerrüttung und einem Verschleiß unterliegt, was letztendlich zu Undichtigkeiten im Speichervolumen führt.

Die vorgenannte Technologie sieht vor, einen Bereich des Untergrunds durch Einpressen von Wasser aufzureißen und dabei Kunstharz zuzugeben. Die Firma kündigt einen Wirkungsgrad von 70 bis 75% an, weil der Fels sich weitgehend elastisch verhalte. Tatsächlich verhält sich Fels beim Fracking weitgehend anelastisch, und Fluidausbrüche ließen sich durch Zugabe von Kunstharz (ohne allein) nicht vermeiden, auch und gerade bei alternierendem Einpumpen und Herauslassen des Fluids.

Davon ausgehend liegt eine **Aufgabe der Erfindung** darin, ein Verfahren zur Herstellung und Betrieb eines Systems zur unterirdischen gravitativen Energiespeicherung vorzuschlagen, das für die Zwischenspeicherung auch größere Speichervolumina bereithält, die vorgenannten Einschränkungen aber nicht aufweist.

Eine weitere Aufgabe liegt darin, ein für das Verfahren geeignetes System sowie einer Anordnung mehrerer dieser Systeme zur gravitativen Energiespeicherung in einem Untergrund unter einer Geländeoberfläche vorzuschlagen.

Die Aufgaben werden mit einem Verfahren, einem System, einer Anordnung sowie einer Verwendung mit den Merkmalen des ersten, des vierten, achten bzw. des elften Patentanspruchs gelöst. Unteransprüche, die sich auf diese beziehen, geben vorteilhafte Ausgestaltungen wieder.

Zur Lösung der Aufgabe wird eine gravitativen Energiespeicherung auf der Basis des folgenden Lösungsansatzes vorgeschlagen: Zur gravitativen Energiespeicherung wird zunächst durch einen nahe der Geländeoberfläche ringzugfest umschlossenen Zugang und einen Packer eine Suspension von quellfähigen Feststoffteilchen unter eine durchgehende Ton- oder Tonsteinschicht injiziert. Rings um den so erzeugten Spalt bildet sich durch hydraulische Konsolidierung eine Doppelmembran, die am Randstreifen durch Druckminderung kalt verschweißt wird. Nach Entnehmen des Packers wird erstmals Wasser in den Spalt gepumpt und so der Boden darüber angehoben, während sich am Bohrlochrand eine plastische Membran bildet. Durch anschließendes Herauslassen von Wasser senkt sich der Boden, und die damit verbundene Verminderung seiner Lageenergie wird wie bei einem Pumpspeicherwerk in elektrische Energie umgewandelt. Mit einigen derartigen Zyklen werden lockere Bodenbereiche verdichtet und Felsbereiche entspannt. Bei anschließenden Zyklen mit hinreichend geringer Amplitude verhält sich der Untergrund überwiegend elastisch, während die Bodenverformungen an der Geländeoberfläche deren ökologische und/oder technische Funktion nicht beeinträchtigen. Der Radius des Spalts ist so begrenzt, dass der Boden darüber beim hydraulischen Anheben nicht instabil werden kann. Mehrere Membranen sind so nebeneinander angeordnet, dass zwischen ihnen Erdpfeiler nicht mit angehoben werden.

Konkret ausgestaltet wird bevorzugt eine Herstellung und Betrieb eines Systems zur unterirdischen gravitativen Energiespeicherung vorgeschlagen, umfassend zumindest einen Teil der nachfolgenden Merkmale:
(1) Auswahl einer als hydraulische Barriere geeigneten Ton- oder Tonsteinschicht im Untergrund,
(2) Abteufung eines Zugangs von der Geländeoberfläche bis zur Unterseite der Barriere nach (1),
(3) Einsetzen einer ringzugfesten Auskleidung des Zugangs nach (2) von der Geländeoberfläche bis zu einem oberen Abschnitt des Zugangs, und Stützung des Untergrunds durch einen Filterkuchen aus einer Suspension quellfähiger Feststoffteilchen,
(4) Einhängen eines Packers in den Zugang nach (2) innerhalb der Barriere nach (1), Anspannen des Packers gegen die Barriere und Anhängen des Packers mit Umlenkrolle,
(5) Injektion einer Suspension quellfähiger Feftstoffteilchen durch den dabei angehobenen Packer nach (4) unter die Barriere nach (1), so dass sich ein annähernd radialsymmetrischer Spalt bildet,
(6) Kontrolle der Spaltausbreitung nach (5) via Druck und Menge der Suspension, sowie mittels Refraktionsseismik,
(7) Erzeugung einer Membran an der Oberseite und der Unterseite des Spalts durch hydraulische Konsolidierung während seiner Herstellung nach (5),
(8) Kaltverschweißung von oberer und unterer Membran nach (7) entlang einem ringförmigen Randstreifen durch zeitweilige Abminderung des Suspensionsdrucks,
(9) Herausnehmen des Packers nach (4), Einsetzen einer Pumpe und eines Elektromotors in die nach oben verlängerte Wandung nach (3) und Schließen derselben bis auf einen Zugang für Wasser und elektrischen Strom,
(10) Anlegen oder Umwidmen eines Wasserreservoirs an oder nahe der Geländeoberfläche über dem Spalt nach (5),
(11) Einpumpen von Wasser in den Zugang nach (2) derart, dass der Filterkuchen nach (3) zu einer Membran verdichtet wird, und dass der Spalt aufgeweitet und der Untergrund - ggf. mit Wasserreservoiren nach (10) - darüber angehoben wird, ohne dass der Rand nach (8) sich öffnet,
(12) Herauslassen von Wasser aus dem Spalt so, dass die gravitative Energie des Bodens darüber wieder abnimmt, während die Pumpe als Turbine wirkt und ihr Motor als Generator Energie in das Stromnetz abgibt,
(13) Verdichten lockerer Untergrundbereiche durch mehrfaches Einpumpen und Herauslassen nach (11) und (12),
(14) Einpumpen und Herauslassen nach (11) und (12) bei felsartigem Untergrund im Pilgerschritt, um die damit verbundene Seismik zu begrenzen,
(15) Wiederholtes Anheben und Absenken gemäß (11) und (12) nach Einfahren gemäß (13) und/oder (14) mit so geringen Höhenänderungen, dass die ökologische und/oder technische Funktionsfähigkeit des Geländes bzw. der Bebauung nicht eingeschränkt wird, und damit so, dass der Energieverlust im Untergrund vernachlässigbar gering ist,
(16) Anordnung mehrerer Systeme nach (1) bis (15) nebeneinander derart, dass die Spalte nicht hydraulisch miteinander verbunden sind, und so, dass zwischen ihnen Erdpfeiler stehen bleiben, die nicht mit angehoben und abgesenkt werden,
(17) Anordnung langgestreckter Erdpfeiler gemäß (16) unter das Gelände durchquerenden Fließgewässern.

Im Rahmen einer bevorzugten Ausführung wird ein Verfahren zur Herstellung und Betrieb eines Systems zur unterirdischen gravitativen Energiespeicherung, umfassend folgende Verfahrensschritte:
a) Auswahl einer als hydraulische Barriere geeigneten Ton- oder Tonsteinschicht im Untergrund. Die Barriere erstreckt sich vorzugsweise zweidimensional horizontal und/oder eben im Untergrund.
b) Abteufung eines (technischen) Zugangs von der Geländeoberfläche bis zur Unterseite der Barriere. Der Zugang ist vorzugsweise ein Bohrloch, das mit einem geologischen Tiefbohrwerkzeug von der Geländeoberfläche durch den Untergrund und durch die Barriere gebohrt wird und vorzugsweise einen runden Querschnitt aufweist. Das Abteufen des Zugangs erfolgt dabei bevorzugt mit Hilfe einer Suspension mit bevorzugt quellfähigen Feststoffteilchen, wobei die Suspension in den Zugang und damit zu den Wandungen des Zugangs gelangt und dort das umgebenden Untergrundmaterial benetzt, zumindest oberflächlich eindringt und mit den Feststoffteilchen einen Filterkuchen bildet, der dann zu einer Membran an der Wandung des Zugangs hydraulisch konsolidiert. Die Membran ist vorzugsweise plastisch verformbar, womit grundsätzlich eine Nachgiebigkeit des Untergrunds bei Druckbeaufschlagung ohne ein Aufreißen der Membran tolerierbar ist. Die bevorzugten quellfähigen Feststoffteilchen sind vorzugsweise quellfähige Minerale und zeichnen sich durch ihre Fähigkeit aus, Wasser auf- und abzugeben und so in ihrer Dichte und Volumen mit variablem Wassergehalt zu oder abnehmen.
c) Einsetzen einer ringzugfesten Auskleidung des Zugangs von der Geländeoberfläche bis zu einem oberen Abschnitt des Zugangs, und Stützung des Untergrunds durch einen (vorgenannten) Filterkuchen aus einer Suspension bevorzugt quellfähiger Feststoffteilchen. Die ringzugfeste Auskleidung ist vorzugsweise ein Rohrstück, das als Ganzes oder in miteinander verbundenen Segmenten in den Zugang eingesetzt wird und geeignet ist, einen Innenüberdruck nach außen aufzuhalten. Das ist insbesondere deshalb im oberen Abschnitt des Zugangs erforderlich, da dort der Untergrund durch einen geringeren Abstand zur Geländeoberfläche meist weniger verdichtet ist als tieferen Untergrundbereichen und damit eine entsprechend höhere Nachgiebigkeit auf anliegende Drücke und Kräfte aufweist. Mit steigender Nachgiebigkeit steigt die Gefahr, dass eine konsolidierte Membran diese nicht mehr auffangen kann und reißt. In höher verdichteten tieferen Untergrund über der Barriere ist dagegen mit einer geringeren Nachgiebigkeit zu rechnen; hierfür ist die vorgenannte Membran, hydraulisch konsolidiert aus einem vorgenannten Filterkuchen ausreichend. Die Wandung des Zugangs im Bereich des Untergrunds zwischen Geländeoberfläche und Barriere unterteilt sich folglich vorzugsweise in zwei Abschnitte, in einen oberen Abschnitt mit eingesetzter ringzugfesten Auskleidung sowie in einen unteren Abschnitt mit einer vorgenannten konsolidierten Membran. Auskleidung und Membran sind vorzugsweise fluiddicht, zumindest wasserdicht.
d) Einhängen eines Packers in den Zugang innerhalb der Barriere (d.h. im Durchstich durch die Barriere), Anspannen des Packers gegen die Barriere und Anhängen des Packers mit einer Umlenkrolle. Der Begriff des Packers steht hier auch für eventuelle andere Abdichtungselemente mit zumindest einer Durchführung für eine Injektionsleitung, wobei jene dichtend im Packer eingesetzt ist oder der Zugang und die Durchführung selbst die Injektionsleitung bilden. Der Packer wird in ein Bohrloch eingesetzt und ist nach außen hin abdichtend gegen die Bohrungswandung verspannbar.
e) Injektion einer Suspension vorzugsweise quellfähiger Feststoffteilchen durch den Packer unter die Barriere, so dass sich ein annähernd radialsymmetrischer Spalt bildet und der Packer in der Barriere angehoben wird, unter Ausbildung einer Membran an der Oberseite und der Unterseite des Spalts durch hydraulische Konsolidierung (in zuvor beschriebener Weise). Mit steigendem Druck und Menge der Suspension erweitert sich das Spaltvolumen und damit die Ausdehnung des Spalts.
f) Kontrolle der Ausbreitung des Spalts in e) über eine Erfassung und Kontrolle von Druck und Menge der Suspension sowie mittels Refraktionsseismik. Vorzugsweise wird dabei vorgeschlagen, die Ausbildung und Ausdehnung des Spalts über eine Erfassung der Pumprate, der Hebung des Packers und/oder der Größe des Spaltvolumen zu kontrollieren.
g) Kaltverschweißung von oberer und unterer Membran entlang eines ringförmigen Randstreifens bei zeitweiliger Abminderung des Suspensionsdrucks. Eine Zurücknahme oder Unterbrechung der Suspensionszufuhr oder der -druck bewirkt eine Unterbrechung der Spaltausdehnung. Insbesondere ist die Membran am umlaufenden Randstreifen aufgrund eines bis an diesen erst unmittelbar zuvor stattgefundenen Rissfortschritts noch nicht abschließend konsolidiert, sodass dort grundsätzlich mit Undichtigkeiten und mit erhöhter lokaler Strömung der Suspension im Spaltvolumen zu rechnen ist. Durch den Stillstand kommt es daher grundsätzlich zu Umlagerungen auch von bereits aus der Suspension abgelagerten Feststoffteilchen, damit zu einer Filterkuchenbildung, Konsolidierung dieses und damit zu der Kaltverschweißung und damit zu zunehmend stabilen Verbindung von oberer und unterer Membran im um das Spaltvolumen umlaufenden Randstreifen.
h) Herausnehmen des Packers aus dem Zugang. Dies erfolgt dann, wenn die Membranen und die Kaltverschweißung für ein nachfolgendes Einfahren des Systems mit Wasser anstelle der vorgenannten Suspension stabil genug sind und das Spaltvolumen nach außen hin wasserdicht ist.

Die vorgenannten Verfahrensschritte a) bis h), bevorzugt in der dargestellten Chronologie, dienen der Herstellung des Spaltvolumens und der abdichtenden Auskleidung dieses mit einer hydraulisch konsolidierten Membran aus Feststoffteilchen einer Suspension. Die Suspension ist daher einer membranbildende Suspension, deren Feststoffanteil vorzugsweise aus Partikeln einem quellfähigen Mineral besteht oder dieses umfasst und/oder ein eines Geobildung förderndes Additiv umfasst.

Es folgen vorzugsweise Verfahrensschritte zum Einfahren des Systems, wobei ein erstmaliges Einpumpen von Wasser langsam und überwacht erfolgt, sodass die sich weitende Oberseite der Doppelmembran und ihr Rand durch weiterer hydraulischer Konsolidierung von im Spalt verbleibendem suspendiertem Feststoff sich nicht erweitern. Dabei erfolgt ein erstmaliges Einpumpen von Wasser in den Spalt im Pilgerschritt, d.h. in mehreren sich addierenden Belastungsschritten mit Unterbrechungen und Zwischenentlastungen, wobei der Untergrund über der Barriere mit der Belastungshöhe verdichtet wird und dabei zunehmend elastisch verformbar wird. Der Untergrund über der Barriere eine bevorzugt eine felsartige Formation auf, was ebenfalls eine elastische Verformbarkeit des Untergrunds begünstigt.

Das vorgenannte Verfahren kennzeichnet sich ferner durch folgende weitere nachgelagerte Verfahrensschritte (vorzugsweise in der nachfolgend genannten Reihenfolge):
i) Einsetzen einer Pumpenturbine (Turbine, geeignet als Pumpe und als Antriebsturbine) mit elektrischer Maschine (als Generator oder Elektromotor einsetzbar) über den Zugang auf oder in die ringzugfeste Auskleidung, womit der Zugang nach oben hin bis auf eine Zuleitung für Wasser fluiddicht abgeschlossen ist,
j) Anlegen oder Umwidmen eines Wasserreservoirs an oder nahe der Geländeoberfläche über dem Spalt, sowie
k) Einfahren des Systems, umfassend ein
   - Einpumpen von Wasser über die Pumpe in den Zugang und den Spalt, sodass der Filterkuchen zu einer Membran verdichtet, der Spalt aufgeweitet und der Untergrund über dem Spalt angehoben wird, womit im Untergrund über dem Spalt gravitative Energie (potentielle Energie) gespeichert wird, ohne dass der ringförmigen Randstreifen sich dabei öffnet,
   - Herauslassen von Wasser aus dem Spalt über den Zugang durch die Pumpenturbine, in der die gespeicherte gravitative Energie über das entweichende Wasser (und damit über eine Absenkung des auf das Spaltvolumen ruhenden Untergrundbereichs) in elektrische Energie gewandelt wird, sowie
   - Verdichten des Untergrunds über dem Spalt durch mehrfacher Wiederholung des Einpumpens und des Herauslassen von Wasser gemäß der Verfahrensmerkmale i) bzw. ii).

Eine bevorzugte Wiederholung des Einfahrens gemäß des vorgenannten Verfahrensmerkmal k) bewirkt eine Abnahme der Höhenänderungen der Geländeoberfläche mit jedem Zyklus aus Einpumpen und Herauslassen. Vorzugsweise wird die Wiederholung so lange durchgeführt, bis dabei so geringe Höhenänderungen auf der Geländeoberfläche auftreten, dass die ökologische und/oder technische Funktionsfähigkeit des Geländes bzw. der Bebauung nicht eingeschränkt wird, und der Energieverlust im Untergrund vernachlässigbar gering ist.

Wie beim ersten Einpumpen umfasst das Verfahren auch grundsätzlich ein einmaliges oder mehrmaliges Einpumpen und Herauslassen beim Einfahren in Pilgerschritten, was zu einer weiteren Verdichtung des hierdurch bewegten Untergrunds, insbesondere des Untergrundbereichs über der lateralen Erstreckung des Spalts bewirkt.

Ferner umfasst das Verfahren vorzugsweise auch einen Betrieb des Systems zur gravitativen Speicherung von Energie unter einer als hydraulischen Barriere geeigneten Ton- oder Tonsteinschicht in einem Untergrund unter einer Geländeoberfläche, bei der über die vorgenannte Pumpe, Turbine oder Pumpenturbine zur Energiespeicherung (Speicherzyklus) Wasser aus dem vorgenannten Wasserreservoir (z.B. See) in das Spaltvolumen eingepumpt und zur Energieabgabe (Abgabezyklus) das Wasser aus dem Spaltvolumen durch die Pumpenturbine wieder aus dem Spaltvolumen bevorzugt zurück in das Wasserreservoir abgeleitet wird. Während des Speicherzyklus dient eine Pumpenturbine als Pumpe, der Generator als Motor zum Pumpenantrieb. Während eines Abgabezyklusses dient die Pumpenturbine als Turbine, die ihre mechanische Energie an den Generator zur Wandlung in elektrische Energie weitergibt.

Eine alternative Beschreibung des Verfahrens zur Herstellung und Betrieb eines Systems zur gravitativen Speicherung von Energie in einem Spaltvolumen in einem Untergrund umfasst vorzugsweise die folgenden Verfahrensschritte:
- Bereitstellung eine als hydraulischen Barriere geeigneten Ton- oder Tonsteinschicht im Untergrund, eines Bohrwerkzeugs, einer ringzugfesten Auskleidung sowie eines Packers mit einer diese durchdringende Injektionsleitung,
- Abteufung eines technischen Zugangs mit dem Bohrwerkzeug von einer Geländeoberfläche über der Barriere durch den Untergrund bis zur Unterseite der Barriere,
- Einsetzen der ringzugfesten Auskleidung ausgehend von der Geländeoberfläche zumindest im obersten Abschnitt des Zugangs,
- Einsetzen des Packers in den Zugang innerhalb der Barriere sowie anspannen dieser gegen die Barriere,
- Injektion einer Suspension durch die Injektionsleitung durch den Packer unter die Barriere, wobei der Packer angehoben unter Ausbildung eines annähernd radialsymmetrischen Spalts unter der Barriere angehoben wird,
- weiteres Einpumpen der membranbildenden Suspension in den sich lateral ausdehnenden Spalt, wobei sich der suspendierte Feststoff mit dem angrenzenden Untergrund einen Filterkuchen bildet, der durch hydraulische Konsolidierung des suspendiertem Feststoff im Spalt eine wasserdichte plastische Membran an der Ober- und Unterseite des Spalts bildet sowie
- Beendigung oder Drosselung des Einpumpens, wobei eine weitere Ausdehnung des Spalts unterbrochen wird und ein wasserdichter plastischer Rand des Spalts sich durch Bildung eines Filterkuchens und weiterer hydraulischer Konsolidierung von im Spalt verbleibendem suspendiertem Feststoff ausbildet.

Vorzugsweise umfasst das Verfahren eine nachfolgende Entfernung des Packers aus dem Zugang.

Das vorgenannte Verfahren gekennzeichnet sich vorzugweise dadurch, dass das Abteufen des Zugangs mit Hilfe der membranbildenden Suspension erfolgt, wobei die Suspension in den Zugang gelangt, wobei weiter bevorzugt sich an der Wandung des Zugangs unterhalb der ringzugfesten Auskleidung durch Bildung eines Filterkuchens und weiterer hydraulischer Konsolidierung des suspendierten Feststoffs eine wasserdichte plastische Membran ausbildet.

Eine bevorzugte Verfahrensvariante gekennzeichnet sich dadurch, dass mindestens ein Zwischenspeicher für Wasser über oder vertikal oberhalb dem Spalt angelegt oder umfunktioniert und über Pumpen oder Turbinen oder mindestens eine Pumpenturbine (als Pumpe als auch als Turbine einsetzbar) an den Zugang angeschlossen werden.

Eine bevorzugte Verfahrensvariante für ein nachfolgendes Einfahren des Systems gekennzeichnet sich dadurch, dass ein erstmaliges Einpumpen von Wasser langsam und überwacht erfolgt, dass die sich weitende Oberseite der Doppelmembran und ihr Rand durch weiterer hydraulischer Konsolidierung von im Spalt verbleibendem suspendiertem Feststoff sich nicht erweitern, wobei weiter bevorzugt das erstmalige Einpumpen im Pilgerschritt erfolgt, wobei der Untergrund über der Barriere verdichtet wird und dabei überwiegend elastisch verformbar wird.

Weiterhin wird zur Lösung der Aufgabe ein **System** zur gravitativen Speicherung von Energie unter einer als hydraulischen Barriere geeigneten Ton- oder Tonsteinschicht in einem Untergrund unter einer Geländeoberfläche vorgeschlagen, das vorzugsweise, aber nicht zwingend, nach dem vorgenannten Verfahren herstellbar, einfahrbar und/oder betreibbar ist.

Das System umfasst ein Spaltvolumen unter der Barriere mit einer oberen und einer unteren wasserdichten plastischen Membran sowie einem Rand um den Spalt (ringförmigen Randstreifen) aus einem hydraulisch konsolidierten Feststoff aus einer membranbildenden Suspension. Vorzugsweise grenzt der Spalt nach oben hin unmittelbar an die Barriere an. Ferner ist über der Barriere ein Untergrundbereich angeordnet, der nach oben hin mit einer Geländeoberfläche abschließt. Folglich umfasst das System ein auf das Spaltvolumen gravitativ wirkenden Untergrundbereich über dem Spalt zwischen der Barriere und der Geländeoberfläche. Der laterale Erstreckungsbereich des Untergrundbereich entspricht vorzugsweise zumindest dem des lateralen Erstreckungsbereich des Spalts. Vorzugsweise wird der Spalt komplett von dem Untergrundbereich überdeckt. Ferner umfasst das System einen (technischen) Zugang von einer Geländeoberfläche über der Barriere durch den Untergrund bis zur Unterseite der Barriere in das Spaltvolumen, wobei eine ringzugfeste Auskleidung ausgehend von der Geländeoberfläche zumindest im obersten Abschnitt des Zugangs vorgesehen ist.

Eine membranbildenden Suspension ist eine Suspension mit suspendierten Feststoffteilchen, die geeignet sind, an einer Wandung zu einem Untergrund mit diesem einen Filterkuchen zu bilden, der sich hydraulisch konsolidiert zu einer Membran weiterentwickelt.

Vorzugsweise, spätestens aber nach einem Einfahren ist der Untergrundbereich gegenüber dem Zustand vor dem Herstellen des Systems verdichtet und überwiegend elastisch verformbar, d.h. der elastische Anteil einer Verformung des Untergrundbereichs beim Betrieb des Systems übersteigt einem plastischen Anteil in dieser Verformung.

Ferner umfasst das System vorzugsweise mindestens einen Zwischenspeicher für Wasser über oder vertikal oberhalb dem Spaltvolumen. Die Zwischenspeicher, zumindest aber mindestens einer dieser ist über Pumpen oder Turbinen (z.B. vorgenannte Pumpenturbine) an den technischen Zugang angeschlossen. Eine bevorzugte Ausgestaltung sieht direkte Verbindungen von jedem Zwischenspeicher zu den Pumpen oder Turbinen vor, die je nach Bedarf individuell oder gruppenweise durchschaltbar sind. Sind der mindestens eine Zwischenspeicher ganz oder auch nur zum Teil auf der Geländeoberfläche und/oder auf dem auf das Spaltvolumen gravitativ wirkenden Untergrundbereich angeordnet, sodass er mit einer Änderung des Füllgrades des Speichervolumens angehoben oder abgesenkt wird, ist der zudem in vorteilhafter Weise für eine zusätzliche Speicherung von gravitativer Energie nutzbar.

Ferner wird eine Anordnung, umfassend mindestens zwei nebeneinander angeordnete Systeme der vorgenannten Art vorgeschlagen, die sich dadurch kennzeichnet, dass zwischen den Spaltvolumen der Systeme Erdpfeiler abseits der gravitativ wirkenden Untergrundbereiche angeordnet sind. Vorzugsweise sind die Spaltvolumina voneinander beabstandet und nicht hydraulisch miteinander verbunden, und zwar in der Weise, dass zwischen ihnen die Erdpfeiler stehen bleiben.

Erdpfeiler werden im Rahmen der Anmeldung die Bereiche des Untergrunds oberhalb zwischen zwei Spalten genannt; sie werden im Gegensatz zu den vorgenannten Untergrundbereichen über den Spalten durch jene nicht angehoben oder abgesenkt. Sie dienen daher nicht der Speicherung von graviativer Energie.

Eine Ausgestaltung sieht lateral langestreckte Erdpfeiler vor, d.h. Erdpfeilerbereiche, die sich bevorzugt geradlinig oder zumindest einer Route folgend auf der Geländeoberfläche erstrecken. Es wird vorgeschlagen, diese Route entlang eines Fließgewässers und die Systeme entsprechend neben dieser Route vorzusehen, um eine angestrebte funktionelle Trennung einer graviativen Energiespeicherung in der Anordnung oder auch nur einzelner Systeme in dieser von dem Fließgewässer durch räumliche Trennung sicherzustellen.

Eine Herstellung von Bohrlöchern (Zugängen) und Spalten, die von einer (wachsartigen) Membran wasserdicht umschlossen sind, durch Einpressen einer bevorzugt membranbildenden (thixotropen) Suspension gibt es bislang in der Geotechnik und im Reservoir Engineering nicht. Neu ist auch die Nutzung als Energiespeicher ohne Bodenaushub mit so geringen Verformungen des Untergrunds, dass dort kaum Energie dissipiert und die Funktionsfähigkeit der Erdoberfläche nicht eingeschränkt wird.

Die Erfindung wird anhand von Ausführungsbeispielen (bevorzugte Ausführungsformen), den folgenden Figuren und Beschreibungen näher erläutert. Alle dargestellten Merkmale und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden. Es zeigen
**Fig.1a** **und b** eine schematische Darstellung einer Ausführungsform einer Anordnung eines Systems mit einer durchgehenden Tonschicht als Barriere - Fallgruppe 1,
**Fig.2a** **und b** eine schematische Darstellung einer Ausführungsform einer Anordnung eines Systems mit einer Tonschicht mit Verwerfungen als Barriere - Fallgruppe 2 sowie
**Fig.3a** **und b** eine schematische Darstellung einer Ausführungsform einer Anordnung eines Systems mit einer Tonschicht mit Caprocks als Barriere - Fallgruppe 3.

Herstellung und Betrieb werden nachfolgend für drei geologisch definierte Fallgruppen dargestellt. Zahlenangaben repräsentieren Größenordnungen, Zeichnungen sind vereinfacht. Generelle Anforderungen, Kombinationen und Ausnahmen werden anschließend dargelegt.

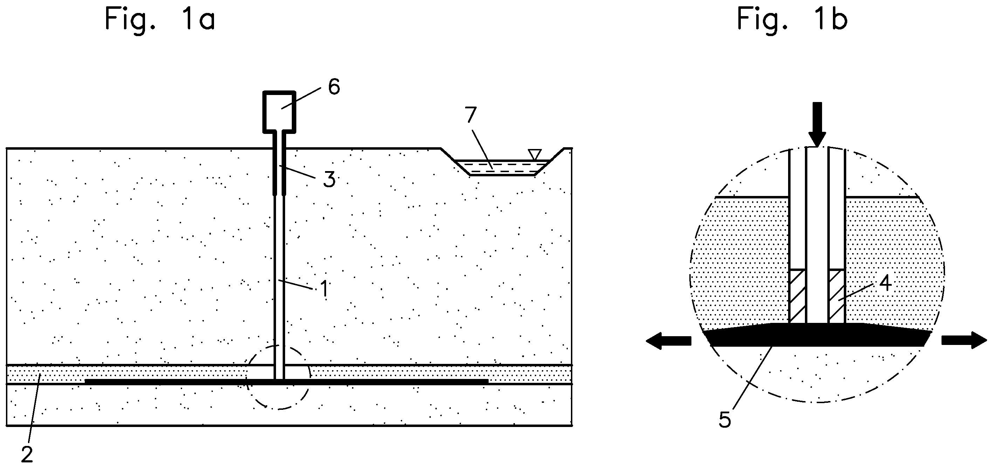

### Fallgruppe 1: Durchgehende Tonschicht (vgl. Fig.1a und b):

In Sedimentbecken kommen insbesondere in Tiefen von ca. 100 m bis 200 m über ca. 1 km bis 10 km horizontal durchgehende Tonschichten von ca. 0,2 m bis 1,5 m Dicke vor, deren Absätze an Verwerfungen infolge geringer tektonischer Umformung kleiner als die Schichtdicke sind. Die Tonteilchen haben in salzfreiem Wasser keine gegenseitige Anziehung, der durch Überdeckung und Liegedauer konsolidierte Ton hat somit keine effektive Kohäsion, unter Wasser freigelegt zerfällt er daher nach Expansion zu einer Suspension. Im Tagebau - insbesondere zur Gewinnung von Braunkohle - dienen solche Tonschichten als Abdichtung der trockengelegten Grube gegen von unten drückendes Grundwasser, während dessen Spiegelhöhe im Fernfeld nahe unter der Geländeoberfläche bleibt. Die Auffüllung danach ist locker und weitgehend wassergesättigt, je nach Ausbeutungsvolumen und Grundwasserstand bleiben Mulden mit Restseen.

Zur Herstellung eines Speichersystems (**Fig.1a** **und b**) werden Bohrungen **1** (= Zugang) bis zu einer geeigneten Tonschicht **2** (= Barriere) niedergebracht. Die Verrohrung **3** (= ringzugfeste Auskleidung) erreicht höchstens ca. 1/10 der Tonschicht-Tiefe, damit der Boden (= Untergrund) ringsum nicht einstürzt und nicht durch den nachfolgenden Überdruck radial verdrängt wird. Darunter stützt ein Filterkuchen aus thixotroper Tonsuspension den Boden. Sofern Gelöstes im Grundwasser die Gelbildung vermindert, erhält die Suspension ein gelförderndes Additiv. Anschließend wird mithilfe eines abdichtenden Packers **4** (vgl. **Fig.1b**) Suspension mit einem so großen Überdruck unter die Tonschicht gedrückt, dass diese mit dem Packer und dem Boden darüber (Barriere und Untergrundbereich über der Barriere) geringfügig angehoben wird. So bildet sich ein wenige cm hoher linsenförmiger Spalt **5.** An dessen Ober- und Unterseite entsteht durch hydraulische Konsolidierung (ähnlich wie in der Verfahrenstechnik mit nicht thixotropen Suspensionen) eine wachsartige Membran von wenigen mm Dicke, die fester als der Filterkuchen am Bohrlochrand ist, doch viskoplastisch und nicht spröd. Die Membran bildet sich durch die an Mineralteilchen der Suspension wirkende Strömungskraft zuerst in besonders durchlässigen Bereichen der Unterlage der Tonschicht, dann in weniger durchlässigen und schließlich dünner an der Unterseite der Tonschicht.

Der horizontale Rand des Spalts ist in jedem Zwischenzustand seiner Herstellung annähernd kreisförmig. Das Volumen des Spalts (= Spaltvolumen) gleicht dem der bislang eingepressten Suspension, seine zentrale Höhe ergibt sich aus der gemessenen Anhebung des Packers. Die zur Bildung einer wasserdichten Membran erforderliche Masse von Tonmineral ist für jeden Zwischenzustand das Produkt der Oberfläche des Spalts und der fixierten Mineralmasse pro Flächeneinheit. Letztere und zur hydraulischen Konsolidierung erforderliche Zeiten ergeben sich aus Laborversuchen. Darauf gestützt wird durch den Mineralanteil der Suspension sowie durch Pumpmengen, -drücke und -zeiten ein Spaltradius vom zwei- bis dreifachen der Tonschicht-Tiefe erreicht.

Nach Erreichen des Spaltrands werden dort obere und untere Membran in einem ringförmigen Streifen kalt miteinander verschweißt. Dazu wird der Suspensionsdruck so weit und so langsam reduziert, dass der Gelanteil der aufeinander gedrückten Membranen zum Spalt hin und Porenwasser aus der weniger konsolidierten Kontaktzone vertikal ausgequetscht wird. Erforderliche Drücke und deren Wirkzeiten ergeben sich aus Laborversuchen und Berechnungen.

Nach Herausnehmen des Packers wird die Verrohrung an eine Pumpe **6** (vgl. **Fig.1a****,** entspricht Pumpenturbine) angeschlossen, und mit ihr wird Wasser eingepumpt. Bei dem zur Herstellung und Nutzung der Doppelmembran erforderlichen Überdruck verhindert die Verrohrung nahe der Oberfläche eine radiale Bodenverdrängung. Durch den Überdruck und mit Kontrolle der Wassermenge nimmt die Höhe des linsenförmigen Spalts erstmals um bis zu ca. 1 m bis 2 m zu. Auch am Bohrlochrand mit Sand oder Ton wird so aus dem Filterkuchen eine wachsartige Membran, die insbesondere das Aufweichen und die Erosion der Tonschicht am Bohrloch verhindert. Beim hydraulischen Aufweiten der den Spalt einschließenden Doppelmembran reißt ihr kaltverschweißter Rand nicht auf, weil dort die Zugspannung infolge Relaxation wegen der langsamen Aufweitung nicht zunimmt, und weil durch Streckung durchlässiger werdende Membranbereiche sich durch Konsolidierung von Suspensionsanteilen abdichten.

Der Spalt bleibt linsenförmig, weil der Boden über seinem Rand kontinuierlich geschert wird und so keinen Absatz bildet. Auch beim anschließenden Entleeren und beim erneuten Füllen des Spalts mit Wasser ist die Verformung der viskoplastischen Membran so klein und langsam, dass sie nicht reißt und daher dicht bleibt. Sich nach dem Entleeren berührende obere und untere Membranabschnitte haften nicht aneinander, weil der Überdruck aufrechterhalten wird. Bei jedem hydraulischen Anheben und Absenken, bei dem Pumpe und Motor am Bohrloch (Bohrung **1**) zeitweilig zu Turbine und Generator werden, wird ein Teil der zu speichernden Energie im Boden dissipiert. Dieser Anteil bleibt nach wenigen Einfahrzyklen dadurch unter 1%, dass Spaltradien,
-abstände und -höhenänderungen optimiert sind. Vorhandene oder angelegte Teiche **7** (= Wasserreservoir, vgl. **Fig.1a**) dienen als Zwischenspeicher für Pumpwasser. Soweit sie über der Doppelmembran (= Membranpaar an Ober- und Unterseite des Spalts) liegen, werden sie mit dem Boden (Untergrund mit Barriere) darüber angehoben und abgesenkt.

Ein kombiniertes Speichersystem (= Anlage) entsteht aus mehreren Bohrungen in einem (ohne: quadratischen) Raster, dessen Maß dem Durchmesser der im Grundriss kreisförmigen Spalte nahekommt. So bleiben zwischen den Doppelmembranen Erdpfeiler stehen, die beim Betrieb des Speichersystems nicht angehoben und abgesenkt werden, damit der angehobene Untergrundbereich in einem stabilen Gleichgewicht bleibt. Hebungen und Senkungen durch den Betrieb des Speichersystems werden so begrenzt, dass die Bodenverformungen an der Erdoberfläche deren Funktion nicht beeinträchtigen. Zunächst locker gelagerte Bodenbereiche (im Untergrund) werden durch zyklische Scherung beim Einfahren verdichtet und dadurch bebaubar, ohne die Grundwasserströmung zu beeinträchtigen. Teiche dienen als Betriebswasserspeicher, während Fließgewässer auf langgestrickten Erdpfeilern nicht angehoben und abgesenkt werden.

Beispielsweise ergibt sich mit einem Feld von 2 km Länge und Breite, einer Tonschicht in 100 m Tiefe und einer mittleren Hebung bis zu 1,5 m eine Speicherkapazität von ca. 7 x 10⁸ kNm, also ca. 1500 MWh (mit Marktpreisen Herbst 2022 mindestens 150.000 Euro). Das reicht als Pufferspeicher für windarme Intervalle von etwa 50 Windrädern mit je 1 MW mittlerer Leistung bei durchschnittlich starkem Wind.

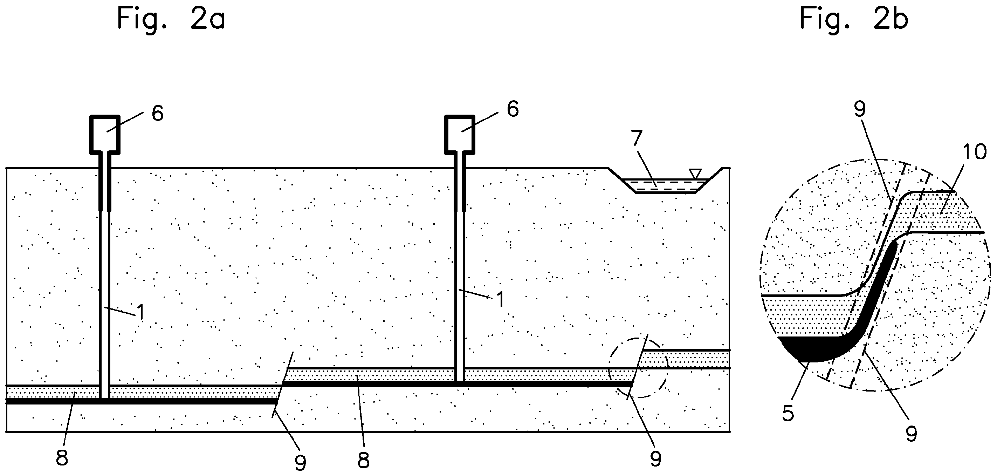

### Fallgruppe 2: Tonschicht mit Verwerfungen (vgl. Fig.2a und b)

In Sedimentbecken können tiefer als in Fallgruppe 1 liegende Tonschichten durch tektonische Umformung entlang von Verwerfungen größere Versetzungen als ihre Dicke aufweisen. Durch lokale Scherung ist dann in Verwerfungen Ton zu Claysmears umgeformt, deren Dicke ca. 1/6 derjenigen der Tonschicht ist. Bei einer Versetzung um mehr als etwa das Acht- bis Zehnfache der Tonschicht-Dicke bilden sich in Claysmears mit Sand oder Kies gefüllte Lücken. Ohne diese eignen sich hinreichend dicke und durchgehende Tonschichten mit Claysmears zur Grundwasser-Abdichtung während der Ausbeutung von Lagerstätten im Tagebau. Dabei kann es zum leichten Abheben des Bodens zwischen Tonschicht und Tagebausohle kommen, und selten zum Ausbruch von Wasser, Tonschlamm und Gas entlang einer Verwerfung mit einem defektem Claysmear. Verwerfungen mit Claysmears und Schluffanteil unterteilen den Untergrund in hydraulische Kompartimente, deren fraktale Anordnung durch Erkundung nur ungefähr erkennbar ist.

Zur Herstellung eines Speichersystems (**Fig.2a** **und b**) werden in Kompartimente Bohrungen **1** (= Zugang) bis in geeignete Tonschicht-Abschnitte **8** (bilden jeweils eine Barriere) zwischen Verwerfungen **9** niedergebracht. Sie werden wie in Fallgruppe 1 mit einer Verrohung bis zu höchstens etwa 1/10 der Tonschicht-Tiefe versehen. Nach Einsetzen eines Packers wird eine thixotrope Suspension von quellfähigem Tonmineral in Wasser (wenn nötig mit geobildendem Additiv) mit Überdruck so unter die Tonschicht gepresst, dass sich unter ihr ein Spalt ausbreitet. Mit einem der größeren Tiefe als in Fallgruppe 1 entsprechenden Überdruck bilden sich dabei wachsartige Membranen um den sich ausbreitenden Spalt herum, die trotz höherer Festigkeit wie in Fallgruppe viskoplastisch sind. An einem Claysmear **10** wird die Ausbreitung des Spalts **5** behindert, zumal innerhalb des Bereichs der Verwerfung **9** auch dünnere Tonbänder vorkommen. An sandgefüllten Lücken eines Claysmears infolge großer Versetzung wird die weitere Ausbreitung eines Spalts durch die Membranbildung blockiert, weil das Spaltwachstum nicht mehr durch einen Tondeckel ausgerichtet ist.

Durch räumlich fraktal verteilte Verwerfungen mit Claysmears sind fertige Spalte nicht mehr kreisrund wie in Fallgruppe 1, sondern kreisähnlich polygonal. Gleichwohl bildet sich nach Entfernen des Packers und Anschließen der Pumpe **6** (entsprechend Pumpenturbine) an die Verrohung durch Einpumpen von Wasser am Bohrlochrand eine wachsartige Membran, die insbesondere die Tonschicht vor Aufweichung und Erosion schützt. Eine Kaltverschweißung des Mambranrandes (= umlaufender Rand) erfolgt wie in Fallgruppe 1 auch dort, wo dieser an einem Claysmear geneigt ist. Abstände von Bohrungen ergeben sich zunächst aus hydrogeologisch vorgegebenen Kompartimenten (vereinfacht in **Fig.2a** **und b**). Bei einer größeren Breite von Bohrlochgruppen als annähernd dem Zwei- bis Dreifachen der Tiefe der Tonschicht müssen Erdpfeiler zwischen Doppelmembranen verbleiben, damit das Gleichgewicht des Bodens darüber beim hydraulischen Anheben stabil bleibt. Wie in Fallgruppe 1 dient ein Teich **7** (= Wasserreservoir) als oberes Reservoir beim Speicherbetrieb, und die Energiedissipation im Boden bleibt bei optimaler Bohrlochanordnung und Hebung unter 1% des gravitativen Anteils pro Zyklus. Die Bodenverformung durch den Speicherbetrieb beeinträchtigt mit genügend kleinen Hebungen die Funktionsfähigkeit des Geländes nicht.

Beispielsweise ergibt bei 2 m mittlerer Hebung und mittlerer Tonschicht- Tiefe von 500 m ein Feld von 2 km Länge und Breite eine Speicherkapazität von ca. 3 x 10¹⁰ kNm (Marktwert 2022 mindestens 2,5 Mio Euro). Diese Untergrundbatterie reicht als Puffer für ca. 500 Windräder mit ca. 1 MW Leistung bei durchschnittlichem Wind.

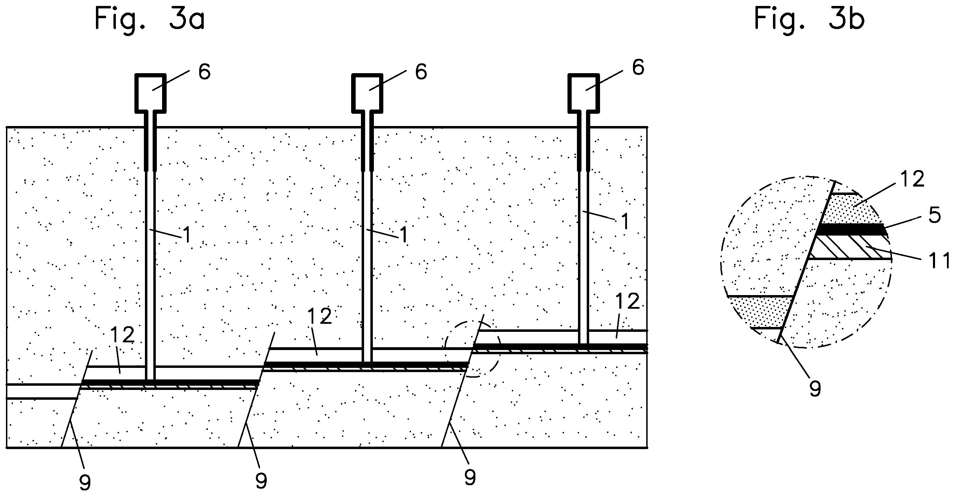

### Fallgruppe 3: Caprocks (vgl. Fig.3a und b)

Erdgas sammelt sich in Sandstein unter Tonsteinschichten in ca. 3 km bis 5 km Tiefe, sofern Verwerfungen (die zusammen mit Claysmears und infolge Kornzerkleinerung mehr Feinkorn enthalten) Erdgas beim Aufsteigen in Caprocks einschließen. Da sich Erdgas in durch Verwerfungen hydraulisch begrenzten Kompartimenten sammelt, wird es innerhalb eines derartigen Felds mithilfe mehrerer Bohrungen gefördert. Nach Stilllegung der Förderbohrungen bleiben geringe Gasmengen unter dem Caprock.

Zur Herstellung eines Speichersystems (**Fig.3a** **und b**) werden Bohrungen **1** reaktiviert oder neu in Kompartimenten zwischen Verwerfungen **9** bis zum Caprock **12** niedergebracht. Mit einer thixotropen Suspension von quellfähigem Tonmineral (wenn nötig mit gelbildendem Additiv) wird dabei nicht nur die Bohrlochwandung gestützt, sondern auch die Turbine des Bohrers angetrieben und das Bohrklein ausgetragen (gängige Technik). Im oben anstehenden Lockergestein wird eine Verrohrung bis zu höchstens ca. 1/10 der Tondeckel-Tiefe installiert. Nach Einsetzen eines Packers wird von jedem Bohrloch aus thixotrope Tonsuspension mit einem so großen Überdruck eingepresst, dass sich mit geringfügiger Hebung des Caprocks Spalte bilden, die von einer wachsartigen Membran aus Tonmineral umschlossen sind. Restgas **11** mit Überdruck unterstützt die Spaltbildung. Der Spalt ist trotz Claysmears **10** annähernd linsenförmig, und sein seitlicher Rand ist kreisähnlich polygonal.

Nach Herausnehmen der Packer und Anschließen der Verrohung an die Pumpen **6** wird Wasser so in den Spalt eingepumpt, dass sich die Tonsteinschicht um ca. 1 bis 2m hebt. Dabei bildet sich auch am Bohrlochrand eine wachsartige (somit duktile) Membran, die eine hydraulische Schwächung des Deckels am Durchlass des Tonsteins verhindert. Bei der ersten Hebung entweicht Restgas, und es kann durch die Verformung des angehobenen Bereichs zu mäßiger Seismik kommen. Deren Magnitude kann durch Anheben im Pilgerschritt verringert werden. Beim Absenken treibt Wasser aus dem Spalt die Pumpen als Turbinen an, und die Motoren werden zu Generatoren. Bei jedem Zyklus wird ein Teil der Energie im Untergrund dissipiert, doch dieser Verlust bleibt nach wenigen Einfahrzyklen bei optimaler Anordnung unter ca. 2%. Pfeiler zwischen Spalten sind nicht erforderlich, solange der Radius des temporär angehobenen Untergrundbereichs geringer als das zwei bis dreifache der Tiefe der Tonsteinschicht ist. Ein Teich dient als oberes Wasserreservoir. Die durch den Betrieb des Speichersystems entstehende Verformung der Geländeoberfläche ist bei Begrenzung der Amplitude auf ca. 1 m bis 2 m wegen der ca. 1000mal größeren Breite so gering, dass bauliche Anlagen und Wasserläufe nicht beeinträchtigt werden.

Bei bis zu 2 m mittlerer Hebung einer 4 km tiefen Tonsteinschicht hat beispielsweise ein Feld von 2 km Länge und Breite eine Speicherkapazität von rund 10¹² kNm (Marktwert Herbst 2022 mindestens 50 Mio. Euro), das reicht als Puffer für rund 1000 Offshore-Windräder mit durchschnittlich 10 MW Leistung bei gutem Wind.

### Anforderungen, Kombinationen und Ausnahmen

Die Technologie gemäß der Erfindung erfordert eingehende Erkundung, Planung und Überwachung. Dazu gehört eine seismische Ortung der vorgesehenen Ton- oder Tonsteinschicht und ihrer Verwerfungen. Damit wird auch der Spalt sichtbar, weil durch ihn Scherwellen gar nicht und Druckwellen langsamer als darüber und darunter propagieren. Obwohl die wachsartige Membran bei ihrer Verformung durch wiederholtes Spaltweitung und -verengung nicht reißt, kommt eine Nachbesserung mittels Suspension infrage, sofern registrierte Sickerverluste dies nahelegen.

Geeignete Tonsteinschichten kommen auch in geringerer Tiefe als in Fallgruppe 3 vor, ebenso wie Tonschichten der Fallgruppe 1 können sie größere Versetzungen und Claysmears aufweisen. Eine Doppelmembran aus hydraulisch konsolidiertem quellfähigen Tonmineral kann in diversen Kombinationen der drei Fallgruppen hergestellt und zur Energiespeicherung genutzt werden. (Flachlandhebung entfällt) Mit Erdpfeilern zur Stabilisierung werden nebeneinander angeordnete Doppelmembranen so aufgeweitet und verengt, dass die Verformungen der Geländeoberfläche klein genug bleiben. Wie in Fallgruppe 1 und 2 dienen Teiche als Betriebswasserspeicher, die mit angehoben und abgesenkt werden können, während Fließgewässer auf langgestrecken Erdpfeilern auf ihrer Höhe bleiben.

Die Technologie erfordert trotz Claysmears hinreichend durchgehende Ton- oder Tonsteindeckel. Kleine Lücken in Claysmears oder infolge früherer Bohrungen werden bei der Spaltbildung überbrückt oder begrenzen sie planmäßig, doch Relikte von Kolken und Grenzen früherer Gewässer sind prohibitiv. Umfangreiche Gaseinschlüsse unter Caprocks müssen zuvor entleert werden. Standorte mit Erdöl oberhalb von Gaseinschlüssen kommen ebensowenig infrage wie solche mit sehr aktiver Tektonik und/oder kaltem Vulkanismus.

### Wirtschaftlicher Nutzen:

In Deutschland werden gegenwärtig pro Jahr etwa 110 THW elektrische Energie verbraucht, mit dem heutigen Preis von mindestens 300 Euro pro MWh entspricht das mindestens etwa 30 Mrd Euro. Atomkraftwerke, die noch ca. 5% beitragen, sollen bis zum Frühjahr 2023 stillgelegt werden, Braunkohlekraftwerke bis 2035 und linksrheinisch bis 2030. Der Strombedarf inklusive EMobilität soll dann durch Windkraft- und Photovoltaikanlagen gedeckt werden, die heute nur bei Starkwind und Sonnenschein das Doppelte des Leistungsbedarfs decken können. Die wegen der Schwankung von Wind und Sonnenstrahlung erforderliche Speicherung von etwa 5 bis 10 TWh soll mit Wasserstoff erfolgen. Das wird für den überwiegenden Anteil kaum gelingen, weil der Wirkungsgrad unter 30% liegt, der nötige Druck von 100 bar massive Behälter erfordert und Lecks von Behältern und Leitungen mit Sauerstoff Knallgas bilden würden.

Die gravitative Energie eines Erdkörpers mit Wichte 10 kN/m³ abzüglich Auftrieb, Breite und Länge 2 km und Tiefe 200 m nimmt bei Anhebung um i.M. 2 m um ca. 3 x 10¹¹ kNm zu. Das entspricht annähernd 90 MWh und könnte als Puffer für eine Windenergie-Anlage mit 50 1MW-Rotoren genügen. Die Kosten der Speicherungnehmen durch Installation und Betrieb der Erdbatterie um höchstens etwa 10% zu, weil pro Jahr ca. 50 wöchentliche und 2 saisonale Zyklen anfallen und der Speicher sich kaum (ohne: oder allenfalls einfach korrigierbar) abnutzt.

Für größere Windkraftanlagen mit Rotoren, die je nach Größe bei gutem Wind i.M. ca. 1 bis 10 MW produzieren, sind größere Speichersysteme erforderlich, dafür kommen insbesondere Rekultivierungs-Gebiete ehemaliger Tagebaue oder ehemalige Gasfelder in Betracht, und auch - wegen harmlos kleiner Bodenverformungen - besiedelte Gebiete. Dissipative Energieverluste sind geringer als bei Pumpspeicherwerken. Die Kosten pro Energieeinheit und Jahr sind wegen der weniger aufwändigen Installation und Wartung geringer als bei Pumpspeicherwerken. Während sich für diese z.B. in Deutschland kaum weitere Standorte finden lassen, reichen nicht oder weniger bebaute Standorte in Sedimentbecken mit Ton- oder Tonsteinschichten für den absehbaren Speicherbedarf nach Umstellung auf eine klimaschonende Energiewirtschaft aus. Dies gilt auch für die Mehrzahl anderer Länder, jedoch nicht für tektonisch sehr aktive und/oder gebirgige Gebiete.

### Bezugszeichenliste:

- 1: Bohrung, Zugang
- 2: Tonschicht, Barriere
- 3: Verrohrung, ringzugfeste Auskleidung
- 4: Packer
- 5: Spalt
- 6: Pumpe, Pumpenturbine
- 7: Teich, Wasserreservoir
- 8: Tonschicht-Abschnitt
- 9: Verwerfung
- 10: Claysmear
- 11: Restgas
- 12: Caprock

## Patentansprüche

1. Verfahren zur Herstellung und Betrieb eines Systems zur unterirdischen gravitativen Energiespeicherung, **gekennzeichnet durch** folgende Verfahrensschritte:
a) Auswahl einer als hydraulische Barriere geeigneten Ton- oder Tonsteinschicht im Untergrund,
b) Abteufung eines Zugangs von der Geländeoberfläche bis zur Unterseite der Barriere,
c) Einsetzen einer ringzugfesten Auskleidung des Zugangs von der Geländeoberfläche bis zu einem oberen Abschnitt des Zugangs, und Stützung des Untergrunds durch einen Filterkuchen aus einer Suspension quellfähiger Feststoffteilchen,
d) Einhängen eines Packers in den Zugang innerhalb der Barriere, Anspannen des Packers gegen die Barriere und Anhängen des Packers mit einer Umlenkrolle,
e) Injektion einer Suspension quellfähiger Feststoffteilchen durch den Packer unter die Barriere, so dass sich ein annähernd radialsymmetrischer Spalt bildet und der Packer in der Barriere angehoben wird, unter Ausbildung einer Membran an der Oberseite und der Unterseite des Spalts durch hydraulische Konsolidierung,
f) Kontrolle der Ausbreitung des Spalts in e) über eine Erfassung und Kontrolle von Druck und Menge der Suspension sowie mittels Refraktionsseismik,
g) Kaltverschweißung von oberer und unterer Membran entlang eines ringförmigen Randstreifens bei zeitweiliger Abminderung des Suspensionsdrucks,
h) Herausnehmen des Packers aus dem Zugang,
i) Einsetzen einer Pumpenturbine mit elektrischer Maschine über den Zugang auf oder in die ringzugfeste Auskleidung, womit der Zugang nach oben hin bis auf eine Zuleitung für Wasser fluiddicht abgeschlossen ist,
j) Anlegen oder Umwidmen eines Wasserreservoirs an oder nahe der Geländeoberfläche über dem Spalt, sowie
k) Einfahren des Systems, umfassend ein
i) Einpumpen von Wasser über die Pumpe in den Zugang und den Spalt, sodass der Filterkuchen zu einer Membran verdichtet, der Spalt aufgeweitet und der Untergrund über dem Spalt angehoben wird, womit im Untergrund über dem Spalt gravitative Energie gespeichert wird, ohne dass der ringförmigen Randstreifen sich dabei öffnen,
ii) Herauslassen von Wasser aus dem Spalt über den Zugang durch die Pumpenturbine, in der die gespeicherte gravitative Energie über das entweichende Wasser in elektrische Energie gewandelt wird, sowie
iii) Verdichten des Untergrunds über dem Spalt durch mehrfacher Wiederholung des Einpumpens und des Herauslassen von Wasser gemäß der Verfahrensmerkmale i) bzw. ii).

2. Verfahren nach Anspruch 1, **dadurch gekennzeichnet, dass** das Einpumpen und Herauslassen beim Einfahren in Pilgerschritten erfolgen.

3. Verfahren nach Anspruch 1 oder 2, **dadurch gekennzeichnet, dass** die Wiederholung des Einfahrens gemäß Verfahrensmerkmal k) solange erfolgt, bis dabei so geringe Höhenänderungen auf der Geländeoberfläche auftreten, dass die ökologische und/oder technische Funktionsfähigkeit des Geländes bzw. der Bebauung nicht eingeschränkt wird, und der Energieverlust im Untergrund vernachlässigbar gering ist.

4. System zur gravitativen Speicherung von Energie unter einer als hydraulischen Barriere **(2)** geeigneten Ton- oder Tonsteinschicht in einem Untergrund unter einer Geländeoberfläche, hergestellt und betrieben mit einem Verfahren nach einem der Ansprüche 1 bis 4, umfassend:
a) ein Spaltvolumen **(5)** unter der Barriere mit einer oberen und einer unteren wasserdichten plastischen Membran sowie einem Rand um den Spalt aus einem hydraulisch konsolidierten Feststoff aus einer membranbildenden Suspension,
b) einen auf das Spaltvolumen gravitativ wirkenden Untergrundbereich über dem Spalt zwischen der Barriere und der Geländeoberfläche sowie
c) einen technischen Zugang **(1)** von einer Geländeoberfläche über der Barriere durch den Untergrund bis zur Unterseite der Barriere **(2)** in das Spaltvolumen, wobei eine ringzugfeste Auskleidung **(3)** ausgehend von der Geländeoberfläche zumindest im obersten Abschnitt des Zugangs vorgesehen ist.

5. System nach Anspruch 4, **dadurch gekennzeichnet, dass** der Untergrundbereich verdichtet und überwiegend elastisch verformbar ist.

6. System nach Anspruch 4 oder 5, umfassend weiterhin:
d) mindestens ein Zwischenspeicher **(7)** für Wasser über oder vertikal oberhalb dem Spaltvolumen **(5)** sowie
e) Pumpen **(6)** oder Turbinen zwischen dem technischen Zugang und dem mindestens einem Zwischenspeicher.

7. System nach Anspruch 6, **dadurch gekennzeichnet, dass** der mindestens eine Zwischenspeicher **(7)** auf der Geländeoberfläche und/oder auf dem auf das Spaltvolumen **(5)** gravitativ wirkenden Untergrundbereich angeordnet ist.

8. Anordnung, umfassend mindestens zwei nebeneinander angeordnete Systeme nach einem der Ansprüche 4 bis 7, **dadurch gekennzeichnet, dass** zwischen den Spaltvolumen der Systeme Erdpfeiler abseits der gravitativ wirkenden Untergrundbereiche angeordnet sind.

9. Anordnung nach Anspruch 8, **dadurch gekennzeichnet, dass** die Spaltvolumina nicht hydraulisch miteinander verbunden sind, und so, dass zwischen ihnen Erdpfeiler stehen bleiben, die nicht mit angehoben und abgesenkt werden.

10. Anordnung nach Anspruch 8 oder 9, **dadurch gekennzeichnet, dass** die Erdpfeiler lateral langestreckt sind und unter einem Fließgewässer angeordnet sind.

11. Verwendung eines Systems nach einem der Ansprüche 4 bis 7 zur Durchführung eines Betriebs gemäß eines Verfahrens nach einem der Ansprüche 1 bis 3.

## Claims

1. Method for creating and operating a system for underground gravitational energy storage, **characterised by** the following method steps:
a) selecting a clay or mudstone layer in the subsoil suitable as a hydraulic barrier,
b) sinking an access shaft from the ground surface to the underside of the barrier,
c) inserting a ring-tensile-resistant lining of the access shaft from the ground surface to an upper portion of the access shaft, and supporting the subsoil by a filter cake consisting of a suspension of swellable solid particles,
d) hanging a packer in the access shaft within the barrier, tensioning the packer against the barrier and attaching a pulley to the packer,
e) injecting a suspension of swellable solid particles through the packer under the barrier, so that an approximately radially symmetrical gap is formed and the packer is lifted in the barrier, forming a membrane at the top and bottom of the gap through hydraulic consolidation,
f) checking the expansion of the gap in e) by measuring and checking the pressure and quantity of the suspension and by seismic refraction,
g) cold welding the upper and lower membranes along a ring-shaped edge strip with temporary reduction of the suspension pressure,
h) removing the packer from the access shaft,
i) inserting a pump turbine with an electric motor via the access shaft onto or into the ring-tensile-resistant lining, the access shaft being sealed at the top in a fluid-tight manner except for a water supply line,
j) creating or repurposing a water reservoir at or near the ground surface above the gap, and
k) running-in the system, involving
i) pumping water via the pump into the access shaft and the gap, so that the filter cake is compressed into a membrane, the gap is widened and the subsoil above the gap is raised, thereby storing gravitational energy in the subsoil above the gap without opening the ring-shaped edge strips,
ii) releasing water from the gap via the access shaft by means of the pump turbine, thereby converting the stored gravitational energy into electrical energy via the escaping water and
iii) compacting the subsoil above the gap by repeating the pumping-in and releasing of water multiple times according to method features i) and ii).

2. Method according to claim 1, **characterised in that** pumping-in and releasing are carried out in successive small steps during the running-in phase.

3. Method according to claim 1 or 2, **characterised in that** the running-in process according to method feature k) is repeated until such small height changes occur on the surface of the terrain that the ecological and/or technical functionality of the terrain or farmland is not restricted, and the energy loss in the subsoil is reduced to a minimum.

4. System for gravitational storage of energy under a clay or mudstone layer suitable as a hydraulic barrier (2) in a subsoil under a ground surface, created and operated by a method according to any of claims 1 to 4, comprising:
a) a gap volume (5) under the barrier with an upper and lower watertight plastic membrane and an edge around the gap made of a hydraulically consolidated solid material consisting of a membrane-forming suspension,
b) a subsoil region acting gravitationally on the gap volume above the gap between the barrier and the ground surface, and
c) a technical access shaft (1) from a ground surface above the barrier through the subsoil to the underside of the barrier (2) into the gap volume, wherein a ring-tensile-resistant lining (3) is provided starting from the ground surface at least in the uppermost portion of the access shaft.

5. System according to claim 4, **characterised in that** the subsoil region is compacted and largely elastically deformable.

6. System according to claim 4 or 5, further comprising:
d) at least one intermediate reservoir (7) for water over or vertically above the gap volume (5) and
e) pumps (6) or turbines between the technical access shaft and the at least one intermediate reservoir.

7. System according to claim 6, **characterised in that** the at least one intermediate reservoir (7) is arranged on the ground surface and/or on the subsoil region acting gravitationally on the gap volume (5).

8. Arrangement comprising at least two systems arranged next to one another according to any of claims 4 to 7, **characterised in that** earth pillars are arranged between the gap volumes of the systems away from the gravitationally acting subsoil regions.

9. Arrangement according to claim 8, **characterised in that** the gap volumes are not hydraulically connected to one another, and that earth pillars remain between them which are not raised and lowered with them.

10. Arrangement according to claim 8 or 9, **characterised in that** the earth pillars are laterally elongated and arranged under a watercourse.

11. Use of a system according to any of claims 4 to 7 for carrying out an operation according to a method according to any of claims 1 to 3.

## Revendications

1. Procédé de production et d'exploitation d'un système de stockage d'énergie souterrain par gravité, **caractérisé par** les stades de procédé suivant :
a) sélection d'une couche d'argile ou d'argilolithe appropriée comme barrière hydraulique dans le sous-sol,
b) creusage d'un accès de la surface du terrain jusqu'au côté inférieur de la barrière,
c) insertion d'un revêtement annulaire résistant à la traction de l'accès de la surface du terrain jusqu'à une partie supérieure de l'accès et appui du sous-sol par un gâteau de filtre en une suspension de particules de matières solides aptes à gonfler,
d) descente d'un packer dans l'accès à l'intérieur de la barrière, serrage du packer sur la barrière et descente du packer par un rouleau de renvoi,
e) injection d'une suspension de particules de matières solides aptes à gonfler par le packer sous la barrière de manière à former un intervalle à peu près symétrique radialement, et à soulever le packer dans la barrière avec formation d'une membrane du côté supérieur et du côté inférieur de l'intervalle par consolidation hydraulique,
f) commande de la propagation de l'intervalle dans e) par une détection et une commande de la pression et de la quantité de la suspension ainsi qu'au moyen d'une sismique de réfraction,
g) soudage à froid de la membrane supérieure et de la membrane inférieure le long d'une bande marginale annulaire avec diminution de temps à autre de la pression de la suspension,
h) retrait du packer de l'accès,
i) insertion d'une turbine de pompe avec moteur électrique par l'accès sur ou dans le revêtement annulaire résistant à la traction, l'accès étant ainsi fermé d'une manière étanche au fluide vers le haut à l'exception d'un conduit d'arrivée d'eau,
j) implantation ou reconversion d'un réservoir d'eau sur la surface du terrain ou à sa proximité au-dessus de l'intervalle, ainsi que
k) introduction du système, comprenant une
i. injection d'eau par l'intermédiaire de la pompe dans l'accès et l'intervalle, de telle manière que le gâteau de couche se densifie en une membrane, que l'intervalle s'élargisse et que le sous-sol soit soulevé au-dessus de l'intervalle, de l'énergie de gravité étant ainsi stockée dans le sous-sol au-dessus de l'intervalle sans que la bande marginale annulaire n'en soit ouverte,
ii. sortie d'eau de l'intervalle par l'accès par l'intermédiaire de la turbine de pompe, dans laquelle l'énergie de gravité stockée est transformée en énergie électrique par l'intermédiaire de l'eau qui s'échappe, ainsi que
iii. densification du sous-sol au-dessus de l'intervalle par répétition multiple de l'injection et de la sortie d'eau suivant les caractéristiques i) et/ou ii) du procédé.

2. Procédé suivant la revendication 1, **caractérisé en ce que** l'injection et la sortie lors de l'introduction s'effectue en étapes à pas de pèlerin.

3. Procédé suivant la revendication 1 ou 2, **caractérisé en ce que** la répétition de l'introduction suivant la caractéristique de procédé k) s'effectue aussi longtemps qu'il en apparaît à la surface du terrain que de si petites variations de hauteur que la fonctionnalité écologique et/ou technique du terrain et/ou la culture n'est pas limitée, et que la perte d'énergie dans le sous-sol soit négligeable.

4. Système pour le stockage par gravité d'énergie sous une couche d'argile ou d'argilolithe appropriée comme barrière **(2)** hydraulique dans un sous-sol sous une surface de terrain, produit et exploité par un procédé suivant l'une des revendications 1 à 4, comprenant :
a) un volume **(5)** d'intervalle sous la barrière comportant une membrane plastique supérieure étanche à l'eau et une membrane plastique inférieure étanche à l'eau ainsi qu'un bord autour de l'intervalle constitué d'une matière solide consolidée hydrauliquement, constituée d'une suspension formant membrane,
b) une zone de sous-sol agissant par gravité sur le volume d'intervalle au-dessus de l'intervalle entre la barrière et la surface de terrain ainsi qu'
c) un accès **(1)** technique d'une surface de terrain au-dessus de la barrière par le sous-sol jusqu'au côté inférieur de la barrière **(2)** dans le volume d'intervalle, un revêtement **(3)** annulaire résistant à la traction étant prévu à partir de la surface de terrain au moins dans la partie la plus élevée de l'accès.

5. Système suivant la revendication 4, **caractérisé en ce que** la zone de sous-sol est densifiée et peut-être déformée de manière prépondérante élastiquement.

6. Système suivant la revendication 4 ou 5, comportant de plus :
d) au moins un stockage **(7)** intermédiaire pour de l'eau au-dessus ou verticalement au-dessus du volume **(5)** d'intervalle ainsi que
e) des pompes **(6)** ou des turbines entre l'accès technique et le au moins un stockage intermédiaire.

7. Système suivant la revendication 6, **caractérisé en ce que** le au moins un stockage **(7)** intermédiaire est disposé à la surface du terrain et/ou sur la zone de sous-sol agissant par gravité sur le volume **(5)** de l'intervalle.

8. Dispositif comprenant au moins deux systèmes suivant l'une des revendications 4 à 7, montés côte à côte, **caractérisé en ce que** sont disposés, entre les volumes des intervalles des systèmes, des piliers prenant appui au sol à l'écart des zones de sous-sol agissant par gravité.

9. Dispositif suivant la revendication 8, **caractérisé en ce que** les volumes des intervalles ne communiquent pas entre eux de manière hydraulique et qu'ils restent ainsi entre eux des piliers prenant appui au sol, qui ne peuvent pas être soulevés et abaissés avec eux.

10. Dispositif suivant la revendication 8 ou 9, **caractérisé en ce que** les piliers prenant appui au sol s'étendent en longueur latéralement et sont disposés sous un cours d'eau.

11. Utilisation d'un système suivant l'une des revendications 4 à 7, pour la réalisation d'une exploitation suivant un procédé suivant l'une des revendications 1 à 3.
